# EUROPEAN PATENT APPLICATION

(11) **EP 4 755 705 A1**
(43) Date of publication of application: **10.06.2026**
(21) Application number: 24879958.7
(22) Date of filing: 09.09.2024
(51) Int. Cl.: B60L 53/80, B60L 53/65, B60L 53/62

(54) **BATTERY SWAPPING DEVICE AND BATTERY SWAPPING SYSTEM**

(30) Priority: 16.10.2023 KR 20230137881
(71) Applicant: LG Energy Solution, Ltd., Seoul 07335 (KR)
(72) Inventor: HONG, Suk Min, Daejeon 34122 (KR); LEE, Hyun Hwa, Daejeon 34122 (KR); AHN, Hong Duk, Daejeon 34122 (KR); PARK, Chan Woo, Daejeon 34122 (KR)
(74) Representative: BCKIP Part mbB
(86) International application number: PCT/KR2024/013585
(87) International publication number: WO 2025/084619

(57) **Abstract**

According to an embodiment disclosed in this document, a battery swapping device may comprise: an insertion unit including a plurality of charging ports where batteries can be inserted or removed; a charging unit including at least one charger configured to charge a battery inserted in the insertion unit; and a control unit configured to acquire authentication information related to the inserted battery, and control connection between the charging unit and the insertion unit based on an authentication result of the battery and a state of the battery swapping device.

## Description

### [Technical Field]

### CROSS-REFERENCE TO RELATED APPLICATION

This application claims priority to and the benefit of Korean Patent Application No. 10-2023-0137881 filed in the Korean Intellectual Property Office on October 16, 2023, the entire contents of which are incorporated herein by reference.

### TECHNICAL FIELD

Embodiments disclosed in this document relate to a battery swapping device and a battery swapping system.

### [Background Art]

Recently, researches and development on secondary batteries are conducted actively. Here, the secondary batteries are batteries that can be charged and discharged, and may be interpreted to include all conventional Ni/Cd batteries and Ni/MH batteries, and recent lithium-ion batteries. As the lithium-ion batteries among the secondary batteries may have a higher energy density compared to the conventional Ni/Cd batteries and Ni/MH batteries, and are manufactured small and lightweight, they can be highly utilized as a power supply for mobile devices. Recently, the lithium-ion batteries draw attention as a next-generation energy storage medium as the scope of using the batteries has been expanded to power supplies of electric vehicles.

Swappable Battery Charging Stations (SBCS) that charge swappable batteries are introduced to swap discharged battery packs with fully charged battery packs. Users may rent a battery pack from the SBCS, use the battery pack in an electric two-wheeled vehicle or the like, and then rent a new battery pack when they return the discharged battery pack. For this purpose, battery swapping stations (BSSs) may be installed at the locations of high accessibility, such as in the vicinity of convenience stores or gas stations.

### [Disclosure]

### [Technical Problem]

An object of the embodiments disclosed in this document is to provide a battery swapping device and a battery swapping system, which can reduce manufacturing cost and operating cost, and efficiently control charging.

The technical problems of the embodiments disclosed in this document are not limited to the technical problems mentioned above, and unmentioned other technical problems will be clearly understood by those skilled in the art from the following descriptions.

### [Technical Solution]

According to an embodiment disclosed in this document, a battery swapping device may comprise: an insertion unit including a plurality of charging ports where batteries can be inserted or removed; a charging unit including at least one charger configured to charge a battery inserted in the insertion unit; and a control unit configured to acquire authentication information related to the inserted battery, and control connection between the charging unit and the insertion unit based on an authentication result of the battery and a state of the battery swapping device.

According to an embodiment, the battery swapping device may further comprise at least one switch connected to the charging unit and the insertion unit and set to change a connection path between the charging unit and the insertion unit.

According to an embodiment, each of the switches may include: an input port connected to any one of the chargers of the charging unit; and a plurality of output ports connected to at least some of the plurality of charging ports of the insertion unit.

According to an embodiment, the control unit may control each of the switches to transmit a signal applied to the input port to at least one among the plurality of output ports.

According to an embodiment, the at least one switch may be a demux switch.

According to an embodiment, each of the chargers may include a plurality of power transmission ports, each of the plurality of power transmission ports may be one-to-one connected to at least some of the plurality of charging ports, and the control unit may control power of each of the chargers to be transmitted to at least one among the plurality of power transmission ports.

According to an embodiment, the number of chargers may be smaller than the number of charging ports.

According to an embodiment, the control unit may allow charging of the inserted battery when the authentication result of the battery is successful, and may not allow charging of the inserted battery when the authentication result of the battery is failed.

According to an embodiment, the state of the battery swapping device includes a charge rate of a battery being charged, and when there is a battery whose charge rate is higher than a threshold value among the batteries being charged, the control unit controls the connection to stop charging of the battery whose charge rate is higher than the threshold value, and charge the inserted battery.

According to an embodiment, the charging unit includes a plurality of chargers, wherein at least some of the plurality of chargers are one-to-one connected to at least some of the plurality of charging ports, the state of the battery swapping device includes the number of remaining chargers, and the control unit determines whether or not to charge the inserted battery using the one-to-one connected charger based on the number of remaining chargers.

According to an embodiment, when the number of remaining chargers is larger than or equal to a preset ratio of the total number of chargers, the control unit controls the connection to charge the inserted battery using the one-to-one connected charger.

According to an embodiment disclosed in this document, a battery swapping system may comprise: a battery swapping device including an insertion unit having a plurality of charging ports where batteries can be inserted or removed, and a charging unit having at least one charger configured to charge a battery inserted in the insertion unit; and a management server configured to receive authentication information related to a battery inserted in the insertion unit, perform authentication of the inserted battery based on the authentication information, and transmit a control signal for controlling the connection between the charging unit and the insertion unit to the battery swapping device based on the authentication result of the battery and a state of the battery swapping device.

According to an embodiment, the battery swapping device may be configured to insert battery pairs that require charging and provide battery pairs that have been accommodated.

According to an embodiment, the authentication information may include at least one among a unique ID of the battery pair, pairing information, information on a means of transportation equipped with the battery pair, and information on the user of the means of transportation.

According to an embodiment, the management server may include a database that matches and stores the unique ID of the battery pair, the pairing information, the information on the means of transportation, and user information.

According to an embodiment, the battery swapping device may acquire the unique ID and pairing information of the inserted battery pair and transmit the unique ID and pairing information to the management server, and the management server may perform authentication of the battery pair by comparing the received unique ID and pairing information with information stored in the database.

According to an embodiment, the management server may allow charging of the inserted battery when the authentication result of the battery is successful, and may not allow charging of the inserted battery when the authentication result of the battery is failed.

According to an embodiment, the state of the battery swapping device may include a charge rate of a battery being charged, and when there is a battery pair inserted and charged in the insertion unit, of which a charge rate is higher than a threshold value, the management server may control the connection to stop charging of the battery pair whose charge rate is higher than the threshold value, and charge the inserted battery pair.

According to an embodiment, the charging unit may include a plurality of chargers, at least some of the plurality of chargers may be one-to-one connected to at least some of the plurality of charging ports, the state of the battery swapping device may include the number of remaining chargers, and the management server may determine whether or not to charge the inserted battery using the one-to-one connected charger based on the number of remaining chargers.

According to an embodiment, when the number of remaining chargers is larger than or equal to a preset ratio of the total number of chargers, the management server may control the connection to charge the inserted battery using the one-to-one connected charger.

### [Advantageous Effects]

As the battery swapping device and the battery swapping system according to the embodiments disclosed in this document may be designed to reduce the number of chargers to be smaller than the number of charging ports, manufacturing cost and operating cost can be reduced.

In addition, various effects that are directly or indirectly grasped may be provided through this document.

### [Description of Drawings]

FIG. 1 is a block diagram showing the configuration of a battery swapping device according to an embodiment disclosed in this document.
FIGS. 2 to 4 are views showing examples of implementing a battery swapping device according to an embodiment disclosed in this document.
FIG. 5 is a view showing an example of implementing a battery swapping device according to another embodiment disclosed in this document.
FIG. 6 is a block diagram showing the configuration of a battery swapping system according to an embodiment disclosed in this document.
FIG. 7 is a view for explaining the configuration and operation of a battery swapping system according to an embodiment disclosed in this document.

### [Mode for Invention]

Hereinafter, various embodiments of the present invention will be described with reference to the accompanying drawings. However, it should be understood that this is not intended to limit the present invention to specific embodiments, but includes various modifications, equivalents, and/or alternatives of the embodiments of the present invention.

In this document, singular forms of a noun corresponding to an item may include one or more of the items, unless the related context clearly indicates otherwise. In this document, each of the phrases such as "A or B", "at least one among A and B", "at least either A or B", "A, B or C", "at least one among A, B and C", and "at least either A, B, or C" may include any one of items listed together in a corresponding phrase among the phrases, or all possible combinations thereof. The terms "1st", "2nd", "first", and "second" may be used only to distinguish a corresponding component from another corresponding component, and do not limit the components in other aspects (e.g., importance or order). When a certain (e.g., a first) component is referred to as being "coupled" or "connected" to another (e.g., second) component with or without a term such as "functionally" or "communicatively", it means that the component may be connected to another component directly (e.g., wired), wirelessly, or via a third component.

Each component (e.g., a module or a program) of the components described in this document may include a single or a plurality of entities. According to various embodiments, one or more of the components or operations of the components may be omitted, or one or more other components or operations may be added. Alternatively or additionally, a plurality of components (e.g., modules or programs) may be integrated into a single component. In this case, the integrated component may perform one or more functions of each of the plurality of components in a way identical or similar to those performed by the corresponding component among the plurality of components before the integration. According to various embodiments, the operations performed by the modules, programs, or other components may be executed sequentially, in parallel, repeatedly, or heuristically, or one or more of the operations may be executed in a different order or omitted, or one or more other operations may be added.

The term "module" or "... unit" used in this document may include a unit implemented in hardware, software, or firmware, and may be used interchangeably with terms such as logic, logic block, part, or circuit. A module may be an integrally configured component, or a minimum unit of a component or a portion thereof that performs one or more functions. For example, according to an embodiment, a module may be implemented in the form of an application-specific integrated circuit (ASIC).

Various embodiments of this document may be implemented as software (e.g., a program or an application) including one or more instructions stored in a storage medium (e.g., a memory) that can be read by a machine. For example, the processor of the machine may call at least one command among one or more stored commands from the storage medium and execute the command. This allows the machine to operate to perform at least one function according to the called at least one command. The one or more commands may include a code generated by a compiler or a code that can be executed by an interpreter. The storage medium that can be read by a device may be provided in the form of a non-transitory storage medium. Here, 'non-transitory' only means that the storage medium is a tangible device and does not include signals (e.g., electromagnetic waves), and this term does not distinguish between the cases where data is stored semi-permanently on the storage medium and the cases where data is stored temporarily.

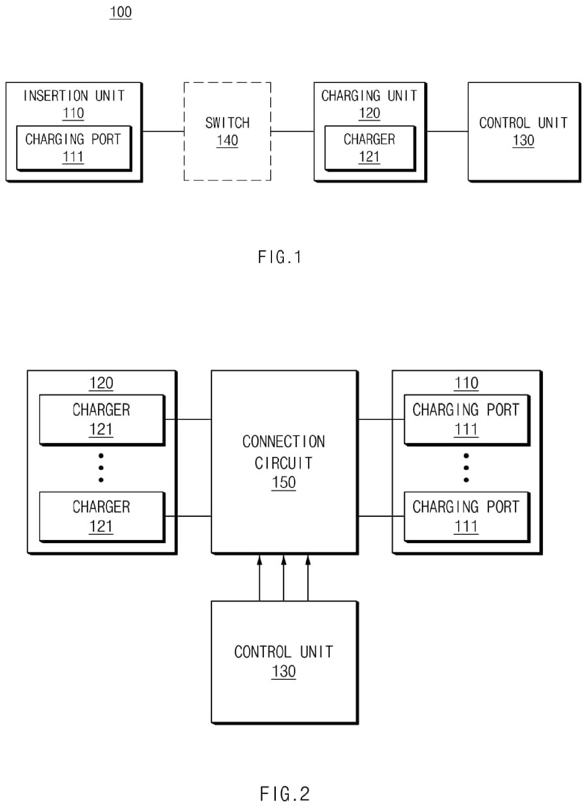

FIG. 1 is a block diagram showing the configuration of a battery swapping device according to an embodiment disclosed in this document.

Referring to FIG. 1, the battery swapping device 100 may include an insertion unit 110, a charging unit 120, and a control unit 130.

The battery swapping device 100 may be mounted on an external device (e.g., a means of transportation such as a two-wheeled vehicle or the like) to accommodate and charge a discharged battery and provide a charged battery. The battery may be a swappable battery.

As the battery swapping device 100 controls connection between the insertion unit 110 and the charging unit 120, the cost consumed for manufacturing the battery swapping device 100 can be reduced, and efficient use of the battery swapping device 100 is possible.

The insertion unit 110 may include a plurality of charging ports 111 where batteries can be inserted or removed, respectively. For example, a battery that requires charging may be inserted into a charging port 111, and a battery that has been partially or fully charged may be removed.

A plurality of charging ports 111 may be provided, and at a specific time point, the state of the charging port 111 may be an empty state, a charging state, a state in which a battery is inserted, a state in which a battery is naturally discharged after having been charged, and the like.

The charging unit 120 may include at least one charger 121 configured to charge a battery inserted in the insertion unit 110. The charging unit 120 may be electrically connected to the insertion unit 110 to provide power for charging the battery inserted in the insertion unit 110.

The control unit 130 may acquire authentication information related to the inserted battery. The control unit 130 may acquire authentication information based on various methods. In an embodiment, when a battery is inserted into the charging port 111, the insertion unit 110 may acquire information on the inserted battery and transmit the acquired information to the control unit 130.

In another embodiment, when a user of the battery swapping device 100 swaps a battery, information on the battery to be charged may be acquired from a server or other configuration external to the battery swapping device 100. At this point, the control unit 130 may receive authentication information from the external server or other configuration that has acquired the battery information. For example, an interface for user input may be installed in the battery swapping device 100, and battery information may be acquired based on the user's input into the interface.

As another example, a user may use a user terminal in which an application for using the battery swapping device 100 is installed, and a server that acquires and manages battery information input by the user through the application may provide the battery information to the control unit 130.

The control unit 130 may control connection between the charging unit 120 and the insertion unit 110 based on the authentication result of the battery and a state of the battery swapping device 100. The control unit 130 may perform control on its own determination or may perform control based on a command received from an upper controller. In the latter case, the control unit 130 does not make determination for control by itself, but may perform only a function of transmitting a control signal to other components (e.g., a charger, a charging port, and the like) of the battery swapping device 100 based on the received command.

The authentication result of the battery may be determined based on authentication information related to the battery. In an embodiment, the control unit 130 may generate the authentication result by itself based on the authentication information. In another example, the control unit 130 may receive the authentication result from an external server.

The state of the battery swapping device 100 may include the state of a battery being accommodated and charged in the battery swapping device 100 (e.g., charge rate, or the like), remaining power, number of remaining chargers, and the like.

The control unit 130 may control connection between the charging unit 120 and the insertion unit 110. Here, that the control unit 130 controls connection between the charging unit 120 and the insertion unit 110 may include controlling the connection path between the chargers 121 of the charging unit 120 and the charging ports 111 of the insertion unit 110 and whether or not to connect the chargers 121 and the charging ports 111.

According to an embodiment, the battery swapping device 100 may further include at least one switch 140 connected to the insertion unit 110 and the charging unit 120 and set to change the connection path between the insertion unit 110 and the charging unit 120. For example, the switch 140 may change the charging port through which power of the charger is transmitted to a specific charger.

According to an embodiment, each of the switches 140 may include an input port connected to any one of the chargers 121 of the charging unit 120 and a plurality of output ports connected to at least some of the plurality of charging ports 111 of the insertion unit 110. Each of the switches 140 may connect the chargers 121 and the charging ports 111 1:N (N is a natural number larger than or equal to 2).

According to an embodiment, the control unit 130 may control each of the switches 140 to transmit a signal applied to the input port to at least one among the plurality of output ports. For example, the control unit 130 may apply a control signal to each of the switches 140, and the switch 140 may change the output port to which the signal is transmitted according to the control signal.

According to an embodiment, the switch 140 may be a demultiplexer (demux) switch. The demux may mean a circuit element that may make one input into a plurality of outputs. For example, the demux may determine an output path according to a logical operation of an input signal and a selection signal.

In this way, the battery swapping device 100 may include at least one switch 140 that connects the chargers 121 and the charging ports 111 1:N (N is a natural number larger than or equal to 2). In an embodiment, some of the chargers 121 and the charging ports 111 may be 1:1 connected. That is, the connection between the chargers 121 and the charging ports 111 may be a mixture of 1:1 connection and 1:N connection.

According to another embodiment disclosed in this document, each of the chargers 121 of the charging unit 120 may include a plurality of power transmission ports. Each of the plurality of power transmission ports may be one-to-one connected to at least some of the plurality of charging ports 111.

Each of the chargers 121 may provide power to at least one among the plurality of power transmission ports. At this point, the control unit 130 may control the power of each of the chargers 121 to be transmitted to at least one among the plurality of power transmission ports. For example, the control unit 130 may control the power to be transmitted through the power transmission port of the charger connected to the charging port in which the inserted battery is accommodated.

According to an embodiment, the number of chargers 121 may be smaller than the number of charging ports 111. As described above, the battery swapping device 100 may be provided with at least one switch 140 and/or may be provided with a plurality of power transmission ports in the charger 121 to control the 1:N connection between the chargers 121 and the charging ports 111.

In this way, the battery swapping device 100 may be provided with a smaller number of chargers 121 than the number of charging ports 111. At this point, the control unit 130 may charge the battery inserted in the charging port without a problem through control of the switches 140 and/or control of the power transmission ports even when the number of chargers 121 is smaller than the number of charging ports 111.

Through this, the battery swapping device 100 may reduce the number of chargers 121 that should be provided, and accordingly, the manufacturing cost of the battery swapping device 100 can be reduced.

Furthermore, as the number of chargers provided in the battery swapping device 100 is adjusted and the connection between the insertion unit 110 and the charging unit 120 is designed accordingly in consideration of the power demand, the demand for swappable batteries, and the like in the area where the battery swapping device 100 is installed, the battery swapping device 100 may operate effectively, together with reduction of cost.

The control unit 130 may control the connection based on the battery authentication result and the state of the battery swapping device 10.

According to an embodiment, the control unit 130 may allow charging of the inserted battery when the authentication result of the battery is successful. On the contrary, the control unit 130 may not allow charging of the inserted battery when the authentication result of the battery is failed. The control unit 130 may allow charging on the premise that the inserted battery is authenticated to make it easy to charge, swap, and manage the battery through the battery swapping device 100.

According to an embodiment, when there is a battery whose charge rate is higher than a threshold value among the batteries being charged, the control unit 130 may control the connection to stop charging of the battery whose charge rate is higher than the threshold value, and charge the inserted battery.

Generally, the charging process of a battery goes through a constant current charging process and a constant voltage charging process. The charging speed in the constant current charging section is faster than the charging speed in the constant voltage charging process, and the speed of constant voltage charging is lowered as the battery is getting close to full charge. In addition, the battery is naturally discharged when charging is finished after the battery is fully charged (for example, SOC = 100%), and a predetermined percentage of state of charge (SOC) is lowered. The degree of natural discharge may vary according to the battery manufacturer, settings of the battery swapping device 100, or the like.

Accordingly, when there is a battery whose charge rate is higher than a threshold value, the control unit 130 may control to terminate charging of the battery or not to charge the battery considering the charging speed and natural discharge, and use remaining power to charge a newly inserted battery. Through this, the battery swapping device 100 may use power efficiently.

In an embodiment, the threshold value may be set based on the charging speed and natural discharge conditions, and may be set to, for example, 90%. This is only an example, and the numerical value and range of the threshold value are not limited thereto.

In an embodiment, the charging unit 120 may include a plurality of chargers 121, and at least some of the plurality of chargers may be one-to-one connected to at least some of the plurality of charging ports. That is, the connection between the insertion unit 110 and the charging unit 120 may be a mixture of a 1:1 connection and a 1:N connection of the chargers and the charging ports.

The control unit 130 may determine whether or not to charge the inserted battery using a 1:1 connected charger based on the number of remaining chargers. For example, when the number of remaining chargers is large and there is much available power, the control unit 130 may control the inserted battery to be charged using a 1:1 connected charger.

According to an embodiment, when the number of remaining chargers is larger than or equal to a preset ratio of the total number of chargers, the control unit 130 may control the inserted battery to be charged using a 1:1 connected charger. In another example, when the number of remaining chargers is smaller than a predetermined ratio of the number of total chargers, the control unit 130 may control the inserted battery to be charged using a 1:N charger that is charging currently.

In an embodiment, the 1:1 connected charger may be a high-voltage charger compared to the 1:N connected charger, and the control unit 130 may control to perform rapid charging by allowing the inserted battery to be charged through the 1:1 connected charger when the number of remaining chargers is sufficient or the remaining power is sufficient. In another example, the 1:1 connected charger may be a charger capable of rapid charging, and the control unit 130 may control to perform rapid charging by allowing the inserted battery to be charged using the charger.

In an embodiment, when there is a battery swap request of a user, the battery swapping device 100 may guide the user to the charging port into which the battery is to be inserted according to the state of the battery swapping device 100, or the like. Guidance to the charging port may be accomplished, for example, through an interface (not shown) of the battery swapping device 100.

FIGS. 2 to 4 are views showing examples of implementing a battery swapping device according to an embodiment disclosed in this document.

First, referring to FIG. 2, the battery swapping device 100 may include an insertion unit 110, a charging unit 120, a control unit 130, and a connection circuit 150.

The insertion unit 110 may include a plurality of charging ports 111. The charging unit 120 may include at least one charger 121. Although a plurality of chargers is shown in FIGS. 2 to 4, the charger of the battery swapping device 100 may be one.

The connection circuit 150 may connect the charging unit 120 and the insertion unit 110. For example, the connection circuit 150 may include at least one switch 140 that connects the chargers and the charging ports 1:N. The connection circuit 150 may include wires that connect the chargers and the charging ports 1:1.

In this way, the connection between the charging unit 120 and the insertion unit 110 through the connection circuit 150 may be a mixture of a 1:1 connection and a 1:N connection between the chargers and the charging ports.

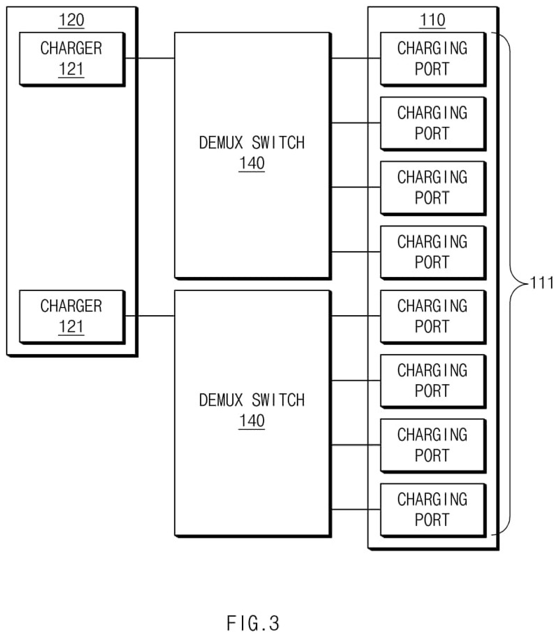

Referring to FIG. 3, the switch 140 may be a demux switch. The demux switch may transmit an input signal to at least one among a plurality of output ports. The demux switch may receive a control signal from the control unit 130 and determine an output port to which the input signal will be transmitted.

Although it is described in FIG. 3 that two 1:4 demux switches are used to control the connection between two chargers and eight charging ports, the types and number of demux switches and the number of chargers and charging ports are not limited thereto. The control unit 130 may control each switch 140 to control the connection between the charging unit 120 and the insertion unit 110.

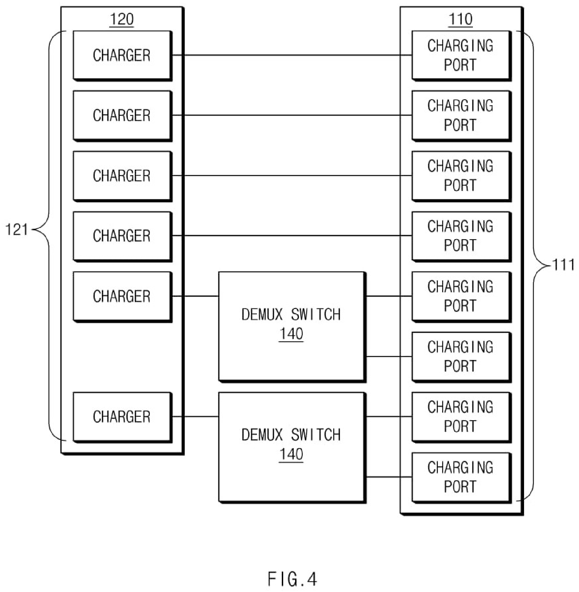

Referring to FIG. 4, some of the chargers and charging ports may be 1:1 connected, and some of the chargers and some of the charging ports may be 1:N connected through the switch 140. That is, the connection between the chargers 121 and the charging ports 111 may be a mixture of 1:1 connection and 1:N connection.

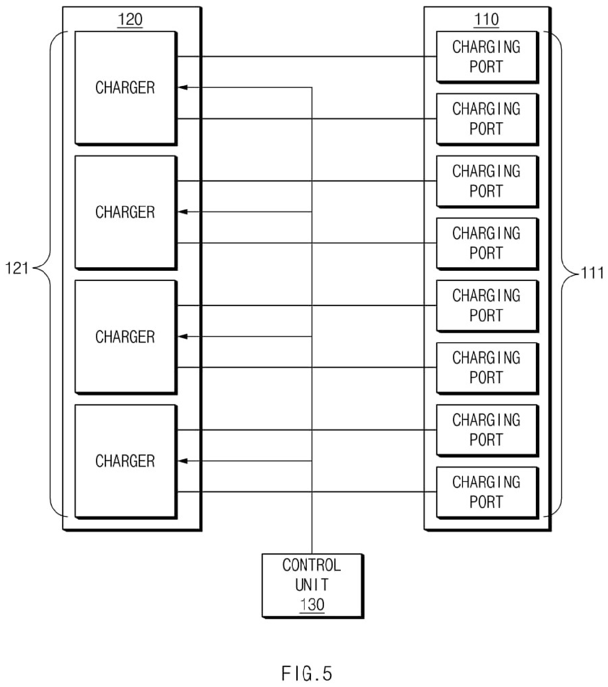

FIG. 5 is a view showing an example of implementing a battery swapping device according to another embodiment disclosed in this document.

Referring to FIG. 5, each charger may include a plurality of power transmission ports. Each of the plurality of power transmission ports may be connected to a charging port 1:1. The control unit 130 may control to transmit power of each charger to at least one among the plurality of power transmission ports.

Referring to FIGS. 2 to 5, the battery swapping device 100 may be configured such that the number of chargers is smaller than the number of charging ports, and accordingly, may reduce the manufacturing cost and operating cost of the battery swapping device 100.

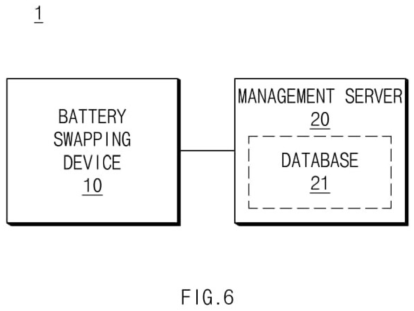

FIG. 6 is a block diagram showing the configuration of a battery swapping system according to an embodiment disclosed in this document.

Referring to FIG. 6, the battery swapping system 1 may include a battery swapping device 10 and a management server 20. The battery swapping device 10 shown in FIG. 6 may be substantially the same as the battery swapping device 100 shown in FIGS. 1 to 5.

In an embodiment, a user may subscribe a battery swap service for using the battery swapping system 1. In this case, an application for using the battery swap service may be provided to the user. The user may use the application to make a reservation, payment, or the like for battery swapping.

The battery swapping device 10 may include an insertion unit including a plurality of charging ports and a charging unit including at least one charger.

The management server 20 may manage swappable batteries registered in the battery swap service, and register and manage users who have subscribed the battery swap service and information on the means of transportation used by the users.

The management server 20 may receive authentication information related to a battery inserted in the insertion unit of the battery swapping device 10. The management server 20 may receive at least a portion of authentication information from the battery swapping device 10. In another example, the management server 20 may receive at least a portion of authentication information from an external configuration such as a user terminal. For example, the management server 20 may receive information related to a battery state from the battery swapping device 10 and receive information related to the user from the user terminal.

The management server 20 may perform authentication of the inserted battery based on the authentication information. For example, the management server 20 may determine whether the battery is a battery managed by the battery swap service based on the authentication information.

The management server 20 may transmit a control signal for controlling the connection between the charging unit and the insertion unit to the battery swapping device 10 based on the authentication result and the state of the battery swapping device 10. The battery swapping device 10 may receive the control signal from the management server 20 and control the connection between the charging unit and the insertion unit.

In an embodiment, the state of the battery swapping device 10 may include the state of a battery being charged in the battery swapping device 10, the state of remaining power, the number of remaining chargers, and the like.

According to an embodiment, the battery swapping device 10 may be configured to insert battery pairs that require charging and provide battery pairs that have been accommodated. That is, the battery swapping system 1 may perform swap of paired battery pairs. As paired battery pairs are swapped, the battery swapping system 1 may manage the value (state) such as the state of charge or the state of health (SOC/SOH) of each battery included in the battery pairs to become similar.

According to an embodiment, the authentication information may include at least one among a unique ID of the battery pair, pairing information, information on the means of transportation equipped with the battery pair, and information on the user of the means of transportation. Here, the unique ID of a battery pair may include a unique ID of each battery included in the battery pair, and the pairing information may be information for confirming whether the battery pair is paired.

Information on the means of transportation may include, for example, the type, chassis number, and the like of the means of transportation, and user information may include a user ID (e.g., application subscription information).

According to an embodiment, the management server 20 may include a database 21 that matches and stores the unique ID of the battery pair, pairing information, information on the means of transportation, and user information. For example, the management server 20 may manage unique IDs of batteries managed by the battery swap service and the pairing information of paired batteries. In addition, the management server 20 may register and manage information on the means of transportation and user information received from users who subscribe the battery swap service.

According to an embodiment, the battery swapping device 10 may acquire the unique ID and pairing information of the inserted battery pair and transmit the unique ID and pairing information to the management server 20. For example, when a battery pair that requires charging is inserted into a charging port, the battery swapping device 10 may read or receive the unique ID and pairing information of each battery through various communication methods such as NFC, device-to-device communication (e.g., CAN communication), WI-FI, Bluetooth, and the like. The battery swapping device 10 may transmit the unique ID and pairing information of the battery pair acquired in this way to the management server 20.

According to an embodiment, the management server 20 may perform authentication of the battery pair by comparing the received unique ID and pairing information with information stored in the database 21. For example, the management server 20 may confirm whether the unique ID and pairing information of the battery received from the battery swapping device 10 match the information stored in the database 21.

In an embodiment, although the unique ID and pairing information of the battery match, the management server 20 may confirm whether information on the means of transportation and user information that match the unique ID and pairing information are appropriate. For example, a user may stop using or unsubscribe the battery swap service, or the means of transportation of the user may be changed. In this case, the user information and/or information on the means of transportation stored in the database 21 may be changed, and accordingly, the matching relation with the existing unique ID and pairing information may be changed. Accordingly, the management server 20 may confirm whether the unique ID and pairing information of the battery received from the battery swapping device 10 match the matching information stored in the database 21.

The management server 20 performs authentication in this way, and may allow charging of the inserted battery pair when the authentication result is successful, and may not allow charging of the inserted battery pair when the authentication result is failed.

According to an embodiment, when there is a battery pair whose charge rate is higher than a threshold value among the battery pairs being charged in the battery swapping device 10, the management server 20 may generate a control signal to stop charging of the battery pair and charge a newly inserted battery pair.

According to an embodiment, the management server 20 may determine whether or not to charge the inserted battery pair using a 1:1 connected charger based on the number of remaining chargers. For example, when the number of remaining chargers of the battery swapping device 10 is equal to or larger than a preset ratio of the total chargers, the management server 20 may control the inserted battery to be charged using a 1:1 connected charger. Through this, the management server 20 may quickly and efficiently charge the battery pair newly inserted to be charged.

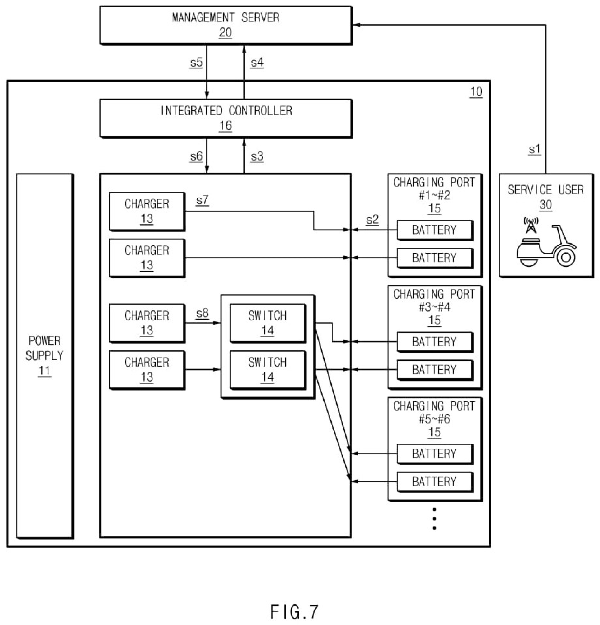

FIG. 7 is a view for explaining the configuration and operation of a battery swapping system according to an embodiment disclosed in this document.

Referring to FIG. 7, a battery swapping system 1 according to an embodiment disclosed in this document is shown. In FIG. 7, although two charging ports are grouped together for convenience to indicate that a battery pair is charged (e.g., charging ports #1 and #2), one battery may be inserted and charged in one charging port.

The battery swapping system 1 may include a battery swapping device 10 and a management server 20. A user 30 may use the battery swap service to start charging a used battery and receive a charged battery.

The battery swapping device 10 may include a power supply 11, at least one charger 13, a switch 14, a plurality of charging ports 15, and an integrated controller 16.

The power supply 11 may supply power to the charger 13, and the charger 13 may receive power and provide power for charging to the charging port connected to the charger 13.

The switch 14 may control the connection path between the charger 13 and the charging port 15. A battery to be charged may be inserted into the charging port 15, and a battery to be swapped may be discharged.

The integrated controller 16 may be substantially the same as the control unit 130 shown in FIG. 1, and may control the configurations of the battery swapping device 10 according to a control signal of the management server 20.

First, the management server 20 may receive user information and information on the means of transportation from the user 30 (S1). For example, the management server 20 may receive and register the user information and information on the means of transportation when the user 30 subscribes the battery swapping system 1.

The management server 20 may match the information on the means of transportation and user information with the unique ID information and pairing information of the battery pair mounted on the means of transportation, and store and manage the information on the means of transportation and user information in a database (e.g., the database 21 shown in FIG. 6).

The management server 20 may continuously reflect and update the state of subscribing the battery swapping system 1 by the user 30, whether the means of transportation is changed, and the like.

The user 30 may insert the battery pair that requires charging into the charging port 15 (S2). The user 30 may insert the battery into an empty charging port where no battery is inserted among a plurality of charging ports.

In an embodiment, the battery swapping system 1 may also guide the user 30 to a charging port 15 for efficient charging. For example, the battery swapping system 1 may include an interface for user input. As an example, the battery swapping system 1 may receive battery information through the interface and guide the user to a charging port 15 for efficient charging based on the received information and/or the current state of the battery swapping device 10. The state of the battery swapping device 10 may include the state of the battery being charged in the battery swapping device 10, the number of remaining chargers, remaining power, and the like.

The integrated controller 16 may receive the unique ID and pairing information of the battery pair (S3). For example, the charging port 15 into which a battery pair is inserted may acquire the unique ID and pairing information of each battery through various communication methods such as NFC, device-to-device communication (e.g., CAN communication), WI-FI, Bluetooth, and the like, and transmit the unique ID and pairing information to the integrated controller 16.

The management server 20 may receive the unique ID and pairing information of the inserted battery pair from the integrated controller 16 (S4). Wired or wireless communication may be established between the management server 20 and the integrated controller 16.

The management server 20 may perform authentication by comparing the received unique ID and pairing information with information stored in a database (e.g., the database 21 shown in FIG. 6) and transmit a control signal to the integrated controller 16 (S5).

The management server 20 may further utilize user information and information on the means of transportation stored in the database during the authentication process of the battery pair. For example, the management server 20 may perform authentication through whether the unique ID and pairing information received from the battery control device 10 matches the user information and/or information on the means of transportation.

The integrated controller 16 may control the connection between the charger 13 and the charging port 15 based on the control signal received from the management server 20 (S6).

The integrated controller 16 may control charging of the battery inserted into the battery swapping device 10 using a 1:1 connected charger (S7) and/or control charging using a 1:N connected charger (S8) based on the control signal received from a management server 20.

As described above, although all the components constituting the embodiments disclosed in this document have been described as being combined as one piece or operating in combination, the embodiments disclosed in this document are not necessarily limited to such embodiments. That is, all the components may be selectively combined as one or more to operate within the scope of the objects of the embodiments disclosed in this document.

In addition, the terms "include," "comprise," and "have" described above mean that a corresponding component may be included unless otherwise specifically stated, and therefore should be interpreted as further including other components, rather than excluding other components. Unless defined otherwise, all terms including technical or scientific terms have the same meaning as commonly understood by those skilled in the art. Commonly used terms, such as terms defined in a dictionary, should be interpreted as being consistent with the contextual meaning of related techniques, and will not be interpreted in an ideal or excessively formal sense unless explicitly defined in this document.

The above explanation only describes the technical spirit disclosed in this document as an example, and those skilled in the art may make various changes and modifications without departing from the essential characteristics of the embodiments disclosed in this document. Therefore, the embodiments disclosed in this document are not intended to limit but to explain the technical spirit of the embodiments disclosed in this document, and the scope of the technical spirit disclosed in this document is not limited by these embodiments. The protection scope of the technical spirit disclosed in this document should be interpreted by the claims provided below, and all technical spirits within the equivalent scope should be interpreted as being included in the scope of this document.

## Claims

1. A battery swapping device comprising:
an insertion unit including a plurality of charging ports where batteries can be inserted or removed;
a charging unit including at least one charger configured to charge a battery inserted in the insertion unit; and
a control unit configured to acquire authentication information related to the inserted battery, and control connection between the charging unit and the insertion unit based on an authentication result of the battery and a state of the battery swapping device.

2. The battery swapping device according to claim 1, further comprising at least one switch connected to the charging unit and the insertion unit and set to change a connection path between the charging unit and the insertion unit.

3. The battery swapping device according to claim 2, wherein each of the switches includes:
an input port connected to any one of the chargers of the charging unit; and
a plurality of output ports connected to at least some of the plurality of charging ports of the insertion unit.

4. The battery swapping device according to claim 3, wherein the control unit controls each of the switches to transmit a signal applied to the input port to at least one among the plurality of output ports.

5. The battery swapping device according to claim 2, wherein the at least one switch is a demux switch.

6. The battery swapping device according to claim 1, wherein each of the chargers includes a plurality of power transmission ports, each of the plurality of power transmission ports is one-to-one connected to at least some of the plurality of charging ports, and the control unit controls power of each of the chargers to be transmitted to at least one among the plurality of power transmission ports.

7. The battery swapping device according to claim 1, wherein the number of chargers is smaller than the number of charging ports.

8. The battery swapping device according to claim 1, wherein the control unit allows charging of the inserted battery when the authentication result of the battery is successful, and does not allow charging of the inserted battery when the authentication result of the battery is failed.

9. The battery swapping device according to claim 8, wherein the state of the battery swapping device includes a charge rate of a battery being charged, and when there is a battery whose charge rate is higher than a threshold value among the batteries being charged, the control unit controls the connection to stop charging of the battery whose charge rate is higher than the threshold value, and charge the inserted battery.

10. The battery swapping device according to claim 8, wherein the charging unit includes a plurality of chargers, wherein at least some of the plurality of chargers are one-to-one connected to at least some of the plurality of charging ports, the state of the battery swapping device includes the number of remaining chargers, and the control unit determines whether or not to charge the inserted battery using the one-to-one connected charger based on the number of remaining chargers.

11. The battery swapping device according to claim 10, wherein when the number of remaining chargers is larger than or equal to a preset ratio of the total number of chargers, the control unit controls the connection to charge the inserted battery using the one-to-one connected charger.

12. A battery swapping system comprising:
a battery swapping device including an insertion unit having a plurality of charging ports where batteries can be inserted or removed, and a charging unit having at least one charger configured to charge a battery inserted in the insertion unit; and
a management server configured to receive authentication information related to a battery inserted in the insertion unit, perform authentication of the inserted battery based on the authentication information, and transmit a control signal for controlling the connection between the charging unit and the insertion unit to the battery swapping device based on the authentication result of the battery and a state of the battery swapping device.

13. The battery swapping system according to claim 12, wherein the battery swapping device is configured to insert battery pairs that require charging and provide battery pairs that have been accommodated.

14. The battery swapping system according to claim 13, wherein the authentication information includes at least one among a unique ID of the battery pair, pairing information, information on a means of transportation equipped with the battery pair, and information on the user of the means of transportation.

15. The battery swapping system according to claim 14, wherein the management server includes a database that matches and stores the unique ID of the battery pair, the pairing information, the information on the means of transportation, and user information.

16. The battery swapping system according to claim 15, wherein the battery swapping device acquires the unique ID and pairing information of the inserted battery pair and transmits the unique ID and pairing information to the management server, and the management server performs authentication of the battery pair by comparing the received unique ID and pairing information with information stored in the database.

17. The battery swapping system according to claim 13, wherein the management server allows charging of the inserted battery when the authentication result of the battery is successful, and does not allow charging of the inserted battery when the authentication result of the battery is failed.

18. The battery swapping system according to claim 17, wherein the state of the battery swapping device includes a charge rate of a battery being charged, and when there is a battery pair inserted and charged in the insertion unit, of which a charge rate is higher than a threshold value, the management server controls the connection to stop charging of the battery pair whose charge rate is higher than the threshold value, and charge the inserted battery pair.

19. The battery swapping system according to claim 13, wherein the charging unit includes a plurality of chargers, at least some of the plurality of chargers are one-to-one connected to at least some of the plurality of charging ports, the state of the battery swapping device includes the number of remaining chargers, and the management server determines whether or not to charge the inserted battery using the one-to-one connected charger based on the number of remaining chargers.

20. The battery swapping system according to claim 19, wherein when the number of remaining chargers is larger than or equal to a preset ratio of the total number of chargers, the management server controls the connection to charge the inserted battery using the one-to-one connected charger.
